# EUROPEAN PATENT APPLICATION

(11) **EP 0 658 847 A1**
(43) Date of publication of application: **21.06.1995**
(21) Application number: 94119502.6
(22) Date of filing: 09.12.1994
(51) Int. Cl.: G06F 12/14, G07B 17/02

(54) **Address decoder with memory allocation and illegal address detection for a microcontroller system**

(30) Priority: 09.12.1993 US 163813
(71) Applicant: PITNEY BOWES INC., Stamford Connecticut 06926-0700 (US)
(72) Inventor: Lee, Young W., Orange, CT 06477 (US); Moh, Sungwon, Wilton, CT 06897 (US); Muller, Arno, Westport, CT 06880 (US)
(74) Representative: Avery, Stephen John

(57) **Abstract**

The microcontroller system comprises of a programmable microprocessor (13), a plurality of memory units (NVM1-3)having a plurality of addressable memory registers. The memory units are in bus communication with the programmable microprocessor (13) and an application specific integrated circuit (15). The application specific integrated circuit includes a circuit for dividing the memory units into a plurality of addressable regions in response to programming of the programmable microprocessor (13). The microprocessor is programmed such that the initial address for each of the regions is assigned by the most significant addressable bits, and the uppermost address for the region being programmably defined by uppermost address for the region. The circuit includes an address register. The microprocessor can address each of the memory registers and write a respective uppermost address in the respective one of the registers. Each of the addresses corresponding to the uppermost addressable registers of the respective memory device. A comparator circuit is provided for comparing the least significant bits of an address generated by the microprocessor (13) to the least significant bits of the uppermost address, and generating an output signal only if the address generated by the microprocessor is less than the uppermost address.

## Description

The present invention relates to an address decoding system for a microcontroller system and, more particularly, to an address decoding system particularly suited for postage metering applications.

European applications of even date are filed concurrently herewith corresponding to the following US applications commonly assigned to Pitney Bowes Inc.: US Patent Application Serial No. 08/163,627, entitled MULTIPLE PULSE WIDTH MODULATION CIRCUIT; US Patent Application Serial No. 08/165,134, DUAL MODE TIMER-COUNTER; US Patent Application Serial No. 08/137,460, entitled DYNAMICALLY PROGRAMMABLE TIMER-COUNTER; US Patent Application Serial No. 08/163,774, entitled MEMORY ACCESS PROTECTION CIRCUIT WITH ENCRYPTION KEY; US Patent Application Serial No. 08/163,811, entitled MEMORY MONITORING CIRCUIT FOR DETECTING UNAUTHORIZED MEMORY ACCESS; US Patent Application Serial No. 08/163,771, entitled MULTI-MEMORY ACCESS LIMITING CIRCUIT FOR A MULTI-MEMORY DEVICE; US Patent Application Serial No. 08/163,790, entitled ADDRESS DECODER WITH MEMORY ALLOCATION FOR A MICRO-CONTROLLER SYSTEM; US Patent Application Serial No. 08/163,810, entitled INTERRUPT CONTROLLER FOR AN INTEGRATED CIRCUIT; US Patent Application Serial No. 08/163,812, entitled ADDRESS DECODER WITH MEMORY WAIT STATE CIRCUIT; US Patent Application Serial No. 08/164,100, entitled PROGRAMMABLE CLOCK MODULE FOR POSTAGE METERING CONTROL SYSTEM; and US Patent Application Serial No. 08/163,629, entitled CONTROL SYSTEM FOR AN ELECTRONIC POSTAGE METER HAVING A PROGRAMMABLE APPLICATION SPECIFIC INTEGRATED CIRCUIT. The content of all these European applications are incorporated hereby by reference.

In postage metering machine applications, and like machine applications, a microcontroller system is employed to control both machine control functions and system functions. System functions, for example, in the postage metering area, refers to such function as funds accounting, external device interface and user interface functions. Machine control functions, for example, refers to such functions as motor control, print control and sensor controls.

In electronic postage metering machine, and like devices, it is customary to develop a specific microcontroller system for each model postage meter model to accommodate the unique control requirements of each meter model. Conventionally, a microcontroller system, of the type customarily used in postage metering applications, is comprised of a programmable microprocessor in bus communication with a read-only memory (ROM) or program memory, random access memory (RAM), non-volatile memories (NVMs) and an application specific integrated circuit (ASIC). The ASIC chip provides a unique or custom set of system capabilities particular to the employing postage meter model in response to directives from the microprocessor. The ASIC chip also controls the addressing of data to the memory units.

It is known that a microprocessor, under certain transient conditions, can generate unintended and/or spurious address information which can result in having data written to an incorrect memory address.

It is an objective of the present invention to present an improved microcontroller system which incorporates an ASIC in combination with a plurality of memory devices wherein the ASIC includes a circuit for testing bus addresses generated by the microprocessor of the microcontroller system to assure that the address generated is a valid address for the intended memory device.

It is a further objective of the present invention to present an improved microcontroller system wherein a bus error signal is generated by the circuit if an address is generated by the microprocessor which bus error is communicated to the microprocessor whereby the microprocessor may be programmed to correctly respond.

It is a further objective of the present invention to present an improved microcontroller system which incorporates an ASIC in combination with a plurality of memory devices wherein the ASIC is programmable to set the addressable space for each of the memory units and includes a circuit for testing bus addresses generated by the microprocessor of the microcontroller system to assure that the address generated is within the programmed address space allocated for the intended memory device.

According to the invention the microcontroller system may comprise a programmable microprocessor in bus communication with a read-only memory (ROM) or program memory, random access memory (RAM), non-volatile memories (NVM) and an application specific integrated circuit (ASIC). The ASIC may include an address decoder system. The address decoder system may comprise a chip select generator, a Memory Size Register (MSR), Over-Lay Register (OVR), Address Decoder and illegal address detection. Upon power-up of the control system, the initial state of the ASIC enables the ROM for reading by the microcontroller. During the start-up routine, the MSR registers 0 through 8 may be written into with a respective 8-bit address configuring the decoder for the particular system. Each address represents the upper valid address of the system memory map for the memory devices.

For example, the memory map allocates or segments an equal 1 megabyte (mb) of consecutive address sequentially to the ROM, RAM, NVM1, NVM2, NVM3 and Chip Select 1 and 2. Two hundred and fifty six (256 bytes) have been reserved for the ASIC. However, in one embodiment the actual memory space addressable is approximately 16 mb. The memory mapping is configured or re-configured during the power-up writing to the MSR registers which specify the valid usable range for each memory segment as well as the size of the memory block of RAM and ROM to be allowed to overlay.

In an embodiment of the invention the respective memory segments can be divided according to their most significant bits. As a result, the circuit is provided with a comparison system which has a programmable register having the maximum allowable address for the respective memory devices. When an address is generated it must have the equivalent most significant bits designated for that memory device. The less significant bits must be less than that programmed into the programmable registers in order for the comparison system to facilitate generation of the appropriate chip select signal. If a write signal has been generated by the microprocessor and, a chip select signal is not generated due to an addressing error, a bus error circuit generates a bus error signal.

The invention will be better understood by referring, by way of example, to the accompanying drawings, wherein:-

Fig. 1 is a diagram of a microcontroller system in accordance with the present invention.

Fig. 2 is a diagram of an ASIC decoder system which includes an illegal address detection and bus error circuit in accordance with the present invention.

Fig. 3 is a diagram of a memory map for the memory units in accordance with the present invention.

Figs. 4A and 4E are logic flow charts of a microcontroller system write access to the non-volatile peripheral memories in accordance with the present invention.

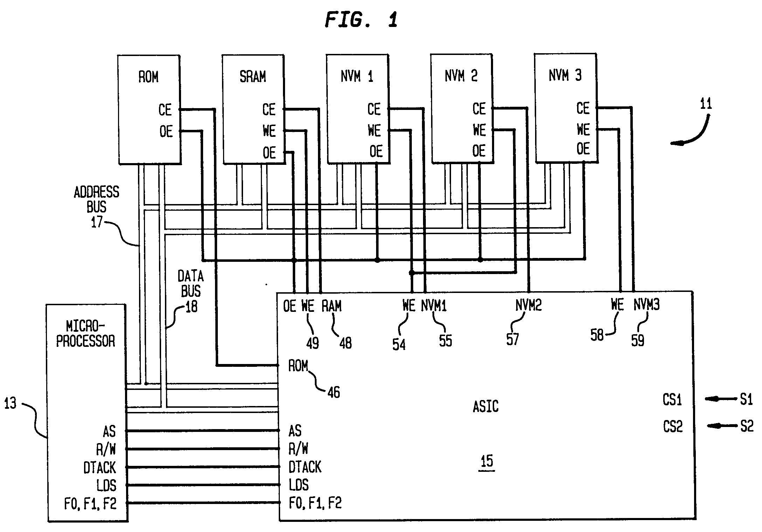

Referring to Fig. 1, a microcontroller system, generally indicated as 11, is comprised of a microprocessor 13 in bus 17 and 18 communication with an application specific integrated circuit (ASIC) 15, a read only memory (ROM), a random access memory (RAM) and a plurality of non-volatile memories (NVM 1, NVM 2, NVM 3). The microprocessor 13 also communicates with the ASIC and memory units by way of a plurality of control line, some of which will be more particularly described subsequently. It should be appreciated that the ASIC 15 includes a number of circuit modules to perform a variety of control functions relative to the operation of the host device, which, in the present preferred embodiment, the host device is a postage meter mailing machine. However, for the purpose of the present invention only, the address decoder and memory control functions will be here particularly described.

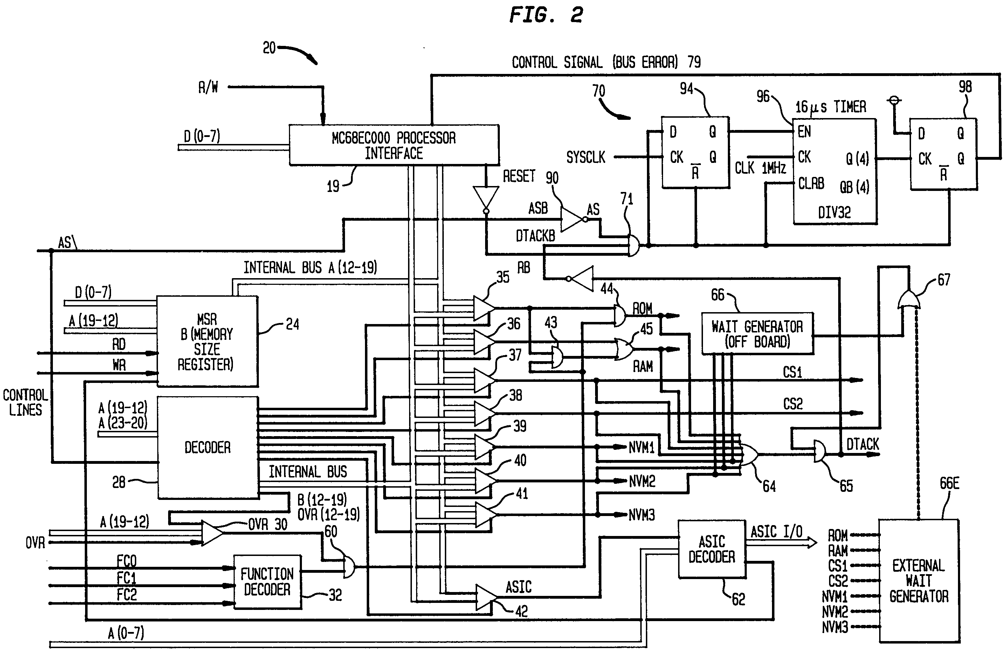

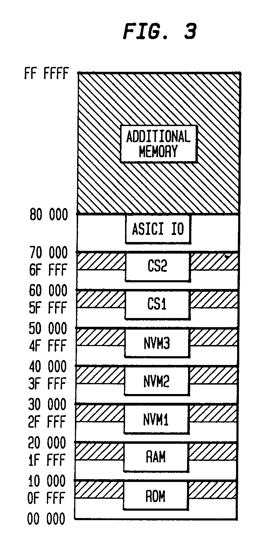

Referring to more particularly to Figs. 2 and 3, the ASIC 15 includes an address decoder circuit, generally indicated as 20. The ASIC 15 includes a processor interface chip 19 containing interface logic necessary to interface the ASIC 15 to the microprocessor 13, which in the preferred embodiment of the present invention is manufactured by Motorola, Model MC68EC000. The microprocessor interface 19 functions to provide signal conditioning, among other things, at the detection of an illegal address in a manner subsequently described. The memory size register (MSR) 24 is in communication with the address bus 17 (address bus lines 19-12) to receive a 8-bit address from the microprocessor 13. The address strobe (AS) output from the microprocessor 13 is directed to a memory decoder section 28 and to an AND gate 71 associated with the illegal address detection circuit 70 of the system. The decoder 28 also communicates with the address bus 17 (address bus lines 23-20, 19-12) to receive 12-bit address information from the microprocessor 13. Also provided is a memory overlay comparator (OVR) 30 and function decoder unit 32.

The output from the memory size register 24 is carried by the 8-bit internal bus "A" and the output from the decoder 28 is carried by the 8-bit internal bus "B". The respective input of each of a plurality of comparators 35 through 42 is in communication with internal bus A and internal bus B. The output of comparator 35 is directed to an AND gates 43 and 44 and the output of comparator 36 is directed to an OR gate 45. The output from AND gate 44 is internally directed to the ROM pin 46 of the ASIC. The output of the OR gate 45 is internally directed to the RAM pin 48 of the ASIC. The output from comparators 37 and 38 are respectively directed internally to ASIC pins 50 and 52, and are intended to provide a memory enable signal for external devices which may be connected to the control system. The output of comparators 39, 40 and 41 is respectively directed internally to the chip select pins 54, 56 and 58.

A control signal OVR is directed to the input side of the overlay comparator chip 30 and enables writing of the memory size supplied from the decoder 28 of the memory overlay block to the ROM-RAM overlay. The function of the ROM-RAM overlay will be described subsequently in more detail. Here, briefly described, the function of the ROM-RAM enables data read or write or program fetch by the microprocessor utilizing the same address range depending of the state of control signals "FCO", "FC1" and "FC2". The control signals "FCO", "FC1" and "FC2" are directed, from the microcontroller, to the input side of a function decoder 28. The output of the overlay comparator chip 30 and the function decoder 32 is directed to AND gate 60 which has an output directed to the inverse input of AND gate 44 and input of AND gate 43. The output of comparator 42 is directed to the input of an ASIC decoder 62. The output of the ASIC decoder 62 is used for providing internal addressing of the ASIC 15. A control output of the decoder 62 is directed to the MSR 24 which enables the memory size memory registers for writing during system power-up.

Referring again to the comparators 37 through 41, gates 44 and 45, the output from each comparators and gates is also directed to an OR gate 64 which has an active output when any of the comparators output goes active. Also the output from each comparator 39, 40 and 41 is directed to a Wait Generator 66. In the preferred embodiment, any of the outputs of gates 44, 45 and comparators 37 to 41 can also be directed to a Wait Generator 66E identical to 66 which is external to the ASIC and only implemented if required. The output of the Wait Generator 66 is directed to OR gate 67 which also receives the output from EXT Wait Generator 66E. The output of OR gate 67 is directed to the inverse input of the AND gate 65 and to the timer 26. The other input of AND gate 65 is controlled by the output of OR gate 64. The output of gate 65 is designated DTACK and is output on an ASIC PIN. The OR gate 67 output, when active, delays the issuance of the DTACK signal for a programmed period of time and also suppresses the timer 96 for the same amount of time. The purpose of delaying the DTACK is based on the fact that the write time for external devices may be protracted. Therefore, to avoid that the microprocessor terminates the write cycle, the issuance of the DTACK signal is delayed an appropriate amount of time.

An illegal address detection circuit, generally indicated as 70 is provided and includes a plurality of gates 71 which receives the address strobe from the microprocessor, the reset signal from interface 19 and the DTACK signal from the gate 65. The output of AND gate 71 is negated, resetting flip-flops 94 and 98 and timer 96, when reset or DTACK are asserted or when the microprocessor negates the address strobe AS\ signal. If reset and DTACK are negated, then assertion of AS\ will enable the output of gate 71 which in turn will remove the reset signal from flip-flops 94 and 98 and timer 96. At the next positive transition of the system clock, flip-flop 94 will be set and will enable timer 96. If timer 96 is not stopped, then after 16 uses, it will set flip-flop 98. The output of flip-flop 98 is directed at interface circuit 19 which issues a bus error signal to microprocessor 13. In normal operation, when the address on the bus is recognized as valid, DTACK will be generated and cause a resetting of flip-flops 94 and 98 and timer 96. Therefore, if an address in an illegal range has been issued, there will not be a DTACK signal issued causing the Q\ output of flip-flop 98 to go active informing the processor interface 19 of a bus error. It should be appreciated that the processor interface 19 is charged with communicating the proper interrupt to the microprocessor 13.

### OPERATION

In the preferred embodiment, the microprocessor interface 19 is intended to contain peripheral capabilities such as print head interface, keyboard and display interface, and asynchronous communication elements for RS232.

The microprocessor 13 operates in either of two modes, program fetch or data read or data write mode. The status signals (FC2, FC1, FC0) of the microprocessor 13 indicates the state and cycle of an instruction that the microprocessor is currently executing. The status signals also indicates that the microprocessor is in either program fetch or data read or data write mode. The status signals are also used for the ROM-RAM overlay and chip select. Table 1 shows the bit messaging for the function decoder 32.

**TABLE 1**

| FC2 | FC1 | FC0 | Cycle Time | Chip Select |
|---|---|---|---|---|
| 0 | 0 | 1 | User Data | RAM |
| 0 | 1 | 0 | User Program | ROM |
| 1 | 0 | 1 | Supervisor Data | RAM only |
| 1 | 1 | 0 | Supervisor Program | ROM only |

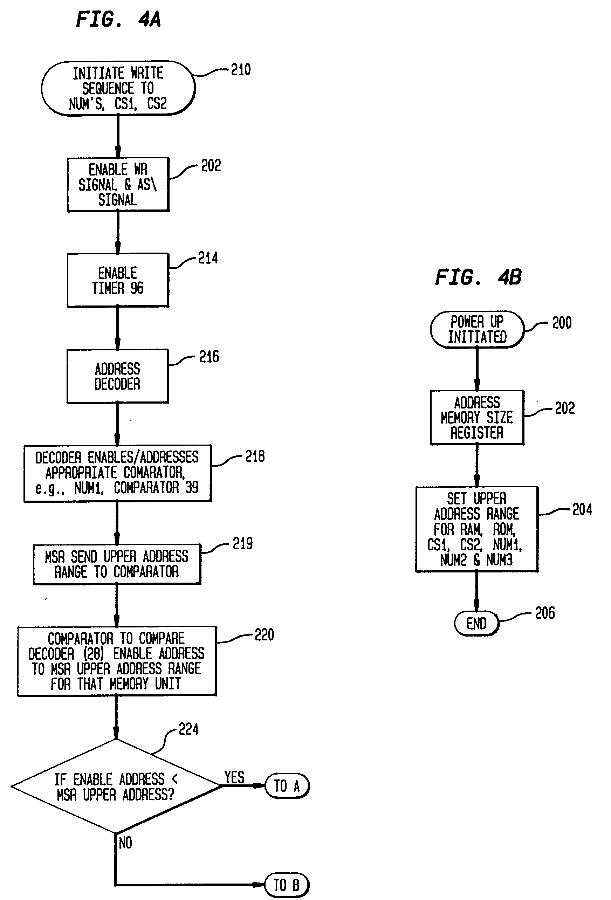

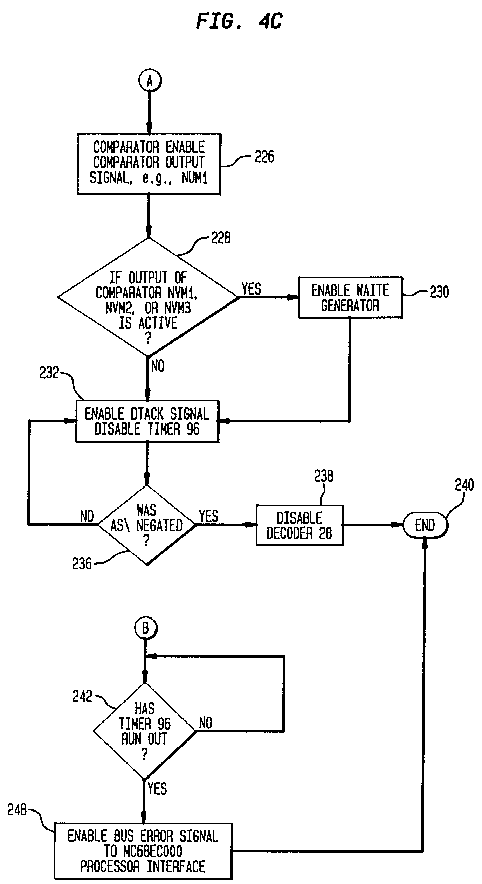

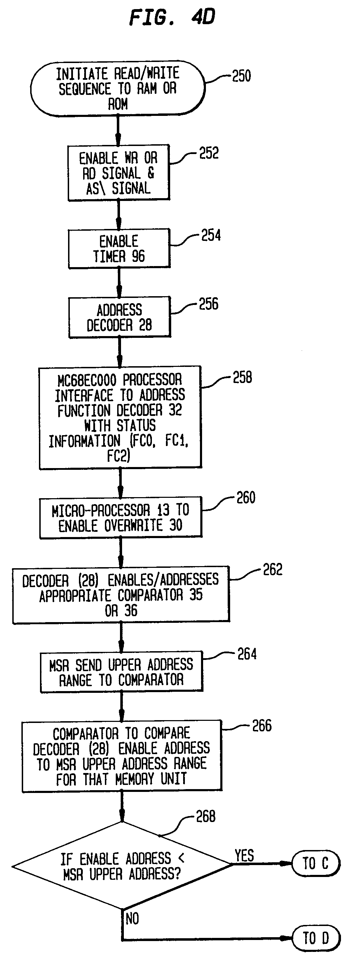

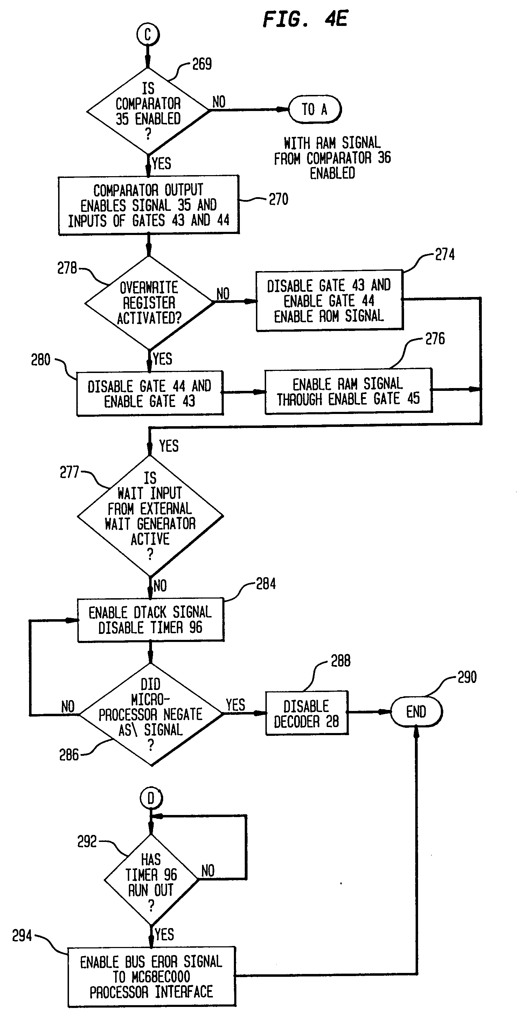

Referring to Fig. 4B, upon power-up, the system is initialized by the microcontroller at 200 which proceeds to address the memory size register at 202. The upper address range for the RAM, ROM, CS1, CS2, NVM1, NVM2 and NVM3 are set at 204 by the microprocessor writing to the MSR. The routine then ends at 206.

Referring to Figs. 4A through 4E, now described is the procedure for initiating a write sequence to the NVMs or ASIC on board memory. At 250, the sequence is initiated by the microprocessor. At 252, the write enable or read enable signal is activated by the microprocessor and the AS\ signal is enabled. Following at 254, the timer 96 is enabled. Also, the address decoder 28 is addressed by the microprocessor at 256. The processor interface then proceeds to address a function decoder 32 with the status information as afore described at 258. The microprocessor 13 then proceeds to enable the overwrite signal at 260. At 262, the decoder 28 enables the appropriate address comparator 35 or 36. At 264, the upper ranges of the MSR are read through the data bus of ASIC.

The appropriate comparator compares the enable address to the MSR address range for the memory unit at 266. Subsequently, a test is performed at 268 to see if the MSR upper address is greater than the address from the decoder 28. If the address is less than the MSR upper address, the routine proceeds to 269. At 269, a test is performed to see which comparator, 35 or 36 is enabled. If comparator 35 is not enabled then proceed to 226 to enable the appropriate comparator, for example, comparator 36. Description of the operation that follow are continued on page 9, line 8. If comparator 35 is enabled then at 270, the comparator 35 is enabled and the comparator output signal is generated for comparator 35. At which point, the decision is made as to whether the overwrite register has been activated at 278. If the overwrite register has not been activated, the routine proceeds to 274 to enable gate 44 and disable gate 43. If the overwrite register has been activated, then the routine proceeds to 280 to disable gate 44 and enable the gate 43 and then proceeds to enable gate 45 at 276. The outputs from gate 44 or 45 is then directed to enable the DTACK signal and disable timer 96 at 284.

Following enabling of the DTACK signal, a decision is made as to whether the microprocessor has negated AS\ at 286. If the microprocessor has not negated the AS\ signal at 286, the DTACK signal is held active. If the microprocessor has negated the address strobe AS\, then the decoder 28 is disabled at 288 and the routine is ended at 290.

Returning to 268, if the enable address is greater than the MSR upper address, then the routine proceeds to wait for the timer 96 to time out at 292. When timer 96 has run out a bus error signal is generated at 294 which is delivered to the processor interface for further processing, for example, a system interrupt. Following the bus error signal, the routine then proceeds to 290 to end.

Upon initiation of a write sequence to the non-volatile memories, NVM1, or NVM2 or NVM3 at 210, the process proceeds to 202 where the write enable signal and the AS\ signal are enabled. Following the enabling of the write enable and AS\ signals, the routine proceeds to enable the timer 96 at logic 214 and the microprocessor addresses the address decoder at 216. Pursuant to enabling of the address decoder 28, the appropriate comparator, for example, NVM1, comparator 39 is enabled at 218. During initialization in 200 to 206, the microprocessor addressed the memory size registers to set the proper address range for the respective comparators. The MSR sends the upper limit of addresses for the particular memory block to the respective comparator in 219. A comparator is enabled for comparison of the decoded enabled address to the memory size register upper address range for that memory at 220. Then following enabling of the proper comparator, a decision is made at 224. If the address compared by the comparator is less than that sent from the memory size register, the routine then proceeds to 226 where the appropriate comparator is enabled and the comparator output signal is directed, for example, to NVM1. Following enabling of the comparator output signal at logic block 226, a test is performed at 228 to see if the output of comparators to NVM1 or NVM2 or NVM3 is activated. If that output is enabled, an enabled wait generator 66 is activated at 230. Following the time out of the wait enable generator, an DTACK signal is generated at 232.

Returning to 228 if the comparator 39, 40 or 41 is not activated, then the DTACK signal is immediately activated at 232. Following enablement of the DTACK, a test is performed to see whether the address strobe has been activated. If the address strobe has not been negated, the DTACK signal remained active. If at 236 the address strobe was negated, the decoder 28 is then disabled at 238 and the routine is ended at logic block 240.

Returning to 224, if the enable address is greater than the MSR upper address range, then the routine proceeds to 242 to wait for timer 96 to run out. When the timer 96 runs out it sets flip-flip 98, the Q\ output therefrom enables a bus error signal to be sent to the processor interface at 248 and the routine is ended at 240. If the processor acknowledges the bus error interrupt by negating the AS, the bus error signal is also cleared by resetting the flip-flop 94, 96 and 98. It should now be appreciated that any address issued by the address decoder in response to the microprocessor is tested by the corresponding comparator 35 to 42 depending on the setting of the most significant bits of the issued address.

Referring to Fig 2, it is noted that the DTACK signal, a System Reset signal from the microprocessor 13 and the AS signal from the timer 26 are inputs to the AND gate 71. The output of the AND gate 71 is directed to the enable input and reset of a flip-flop 94, the clock input of a 16-bit timer 96 and the reset pin of a flip-flop 98. The flip-flop 94 is driven by the system clock. The output from the flip-flop 94 is directed to the enable input of the timer counter 96. The output of the timer counter 96 is directed to the clock input of the flip-flop 98. The enable input of the flip-flop 98 is tied active. It should be appreciated that when the AS signal is inactive or the DTACK signal is active or the reset signal is active, the AND gate 71 is set inactive holding flip-flops 94 and 98 and timer 96 in reset.

## Claims

1. A microcontroller system comprising:
a programmable microprocessor,
memory means having a plurality of addressable memory registers, said memory means being in bus communication with said programmable microprocessor,
circuit means for dividing said memory means into a plurality of addressable regions in response to programming of said programmable microprocessor, said addressable region being defined by an uppermost address for said region, said lowermost address being determined by the most significant bit of said address region, and
comparator means for comparing the least significant bits of an address generated by said microprocessor to the least significant bits of said uppermost address, and generating an output signal only if said address generated by said microprocessor is less than said uppermost address.

2. A microcontroller system as claimed in claim 1 further comprising means responsive to said address generated by said microprocessor and said output signal to generate a bus error signal if said output signal is not present within a certain time after the generation of an address generated by said microprocessor.

3. A microcontroller system as claimed in claim 1 or 2, wherein said circuit means comprises an address register means having a plurality of memory registers, said microprocessor having means for addressing each of said memory registers and writing a respective address in said respective one of said registers, said respective address corresponding to uppermost addressable registers of said respective addressable regions of said memory means.

4. A microcontroller system comprising:
a programmable microprocessor,
memory means having a plurality of addressable memory registers, said memory means in bus communication with said programmable microprocessor,
circuit means for dividing said memory means into a plurality of addressable regions in response to programming of said programmable microprocessor, said microprocessor being programmed such that said initial address for each of said regions being defined by the most significant addressable bits, and said addressable region being defined by an uppermost address for said region,
said circuit means having an address register means having a plurality of memory registers, said microprocessor having means for addressing each of said memory register and writing a respective uppermost address in said respective one of said registers, said respective address corresponding to uppermost addressable registers of said respective addressable regions of said memory means, and
comparator means for comparing the least significant bits of an address generated by said microprocessor to the least significant bits of said uppermost address, and generating an output signal only if said address generated by said microprocessor is less than said uppermost address.

5. A microcontroller system as claimed in claim 4 further comprising means for comparing an address generated by said microprocessor to each of said uppermost addresses and generating an informing signal to said microprocessor if said address is not within said addressable region.

6. A microcontroller system according to any preceding claim and operatively associated with a host device.

7. A microcontroller system according to claim 6, wherein said host device is a postage meter mailing machine.
